# FASCICULE DE BREVET EUROPEEN

(11) **EP 3 823 881 B1**
(45) Date de publication et mention de la délivrance du brevet: **24.07.2024**
(21) Numéro de dépôt: 19742864.2
(22) Date de dépôt: 14.06.2019
(51) Int. Cl.: B62D 21/15, B62D 25/02, B62D 25/20

(54) **CLOISONS DE LONGERON POUR CHARGEMENT EN FLEXION EN CAS DE CHOC LATERAL**
SEITENSCHIENENWÄNDE ZUR BIEGEBELASTUNG BEI EINEM SEITENAUFPRALL
SIDE RAIL WALLS FOR BENDING LOADING IN THE EVENT OF A LATERAL IMPACT

(30) Priorité: 18.07.2018 FR 1856652
(43) Date de publication de la demande: 26.05.2021
(73) Titulaire: Stellantis Auto SAS, 78300 Poissy (FR)
(72) Inventeur: FONFREDE, Stéphane, 90000 BELFORT (FR); THOR, Tou, 25150 PONT DE ROIDE VERMONDANS (FR)
(86) Numéro de dépôt international: PCT/FR2019/051443
(87) Numéro de publication internationale: WO 2020/016493

(56) Documents cités:
- EP-A1- 3 042 832
- WO-A1-2013/150209

## Description

L'invention a trait au domaine des véhicules automobiles, plus particulièrement à la problématique d'absorption d'un choc latéral par un véhicule automobile.

La structure de bas de caisse des véhicules automobiles comprend classiquement un plancher délimité par des profilés de bas de caisse ou longerons latéraux, et entre lesquels sont situées généralement des traverses d'assise avant qui encadrent un tunnel central et servent à fixer les sièges avant au plancher. En cas de choc latéral de type poteau, ces traverses d'assise avant ont un rôle fondamental car elles contribuent avec les longerons latéraux à la rigidité de la structure de bas de caisse et en particulier à l'absorption de l'énergie du choc latéral sur les longerons en formant une voie de passage des efforts de ces derniers.

Pour améliorer la sécurité des passagers en cas d'un choc latéral, il est donc souhaitable que l'absorption de l'énergie du choc par les traverses d'assise se fasse le plus efficacement possible. A cet égard, des cloisons sont généralement disposées transversalement à l'intérieur des longerons latéraux et en vis-à-vis des traverses d'assise. Classiquement ces cloisons ont une forme rectangulaire et occupent verticalement une moitié de la section transversale des longerons. Tel est le cas par exemple dans le document brevet publié FR 3 027 274 A1 qui divulgue une structure de bas de caisse avec des longerons latéraux présentant des demi cloisons situées en regard de la traverse d'assise avant et en face d'un raidisseur en forme de U renversé.

Dans cet enseignement, la forme et le positionnement de ces cloisons ou demi-cloisons rectangulaires dans les longerons latéraux a en fait pour conséquence lors d'un choc latéral de permettre un chargement homogène de la voie de passage des efforts des longerons sur toute la hauteur de la traverse d'assise avant adjacente et donc d'empêcher ou de limiter la déformation de cette dernière. Une telle configuration visant à conserver la stabilité du carré d'assise a cependant pour effet de charger fortement et, partant, déformer le tunnel central.

Toutefois, dans certaines situations il peut s'avérer difficile et/ou non désirable d'assurer un chargement maitrisé de la traverse d'assise dans son axe. Cela peut notamment être le cas des structures de bas de caisse présentant des sièges bas, et de ce fait des traverses d'assise avant basses. En effet, lorsque les longerons latéraux des véhicules à assises avant basses sont munis de cloisons ou de demi-cloisons rectangulaires, telles que précédemment décrites, le chargement de la voie d'effort des longerons sur la traverse d'assise avant peut se faire involontairement en dehors de l'axe horizontal de celle-ci, ou le désaxage du chargement sur la traverse d'assise avant peut ne pas être suffisant. Il s'en suit potentiellement que le chargement désaxé des efforts génère alors une flexion ou flambage non maîtrisée de la traverse.

WO 2013/150209 A1 divulgue une structure de bas de caisse de véhicule automobile telle que dans le préambule de la revendication 1.

L'invention a pour objectif de pallier au moins un des inconvénients de l'état de la technique susmentionné. Plus particulièrement, l'invention a pour objectif d'améliorer la sécurité des passagers en cas de choc latéral sur les véhicules en assurant une reprise et une transmission d'effort maitrisées.

A cet effet, l'invention a pour objet une structure de bas de caisse de véhicule automobile, comprenant un plancher, un profilé de bas de caisse, de chaque côté du plancher, au moins une cloison transversale dans au moins un des deux profilés de bas de caisse, remarquable en ce que la ou au moins une des cloisons transversales présente un bord intérieur et un bord extérieur, le bord extérieur présentant une hauteur minimale supérieure à une hauteur minimale du bord intérieur, de manière à générer au niveau du plancher, en cas de choc latéral, un couple de flexion autour d'une direction longitudinale, et la ou chacune des cloisons transversales présente une ou plusieurs nervures horizontales.

Les notions « intérieur » et « extérieur » pour les bords des cloisons transversales s'entendent transversalement par rapport au véhicule.

Selon un mode avantageux de l'invention, les bords intérieur et extérieur de la ou des cloisons transversales sont verticaux et/ou présentent une inclinaison moyenne inférieure à 30° par rapport à la verticale.

Selon un mode avantageux de l'invention, chacun des deux profilés de bas de caisse comprend un longeron intérieur et un longeron extérieur fixé audit longeron intérieur, le bord intérieur de la ou de chacune des cloisons transversales étant en vis-à-vis du longeron intérieur correspondant et le bord extérieur de la ou de chacune des cloisons transversales étant en vis-à-vis du longeron extérieur correspondant.

Selon un mode avantageux de l'invention, la hauteur minimale du bord extérieur de la ou de chacune des cloisons transversales est supérieure à une mi-hauteur du bord intérieur.

Selon un mode avantageux de l'invention, le bord extérieur de la ou de chacune des cloisons transversales présente une hauteur maximale supérieure à une hauteur maximale du bord intérieur.

Selon un mode avantageux de l'invention, la ou chacune des cloisons transversales présente un bord inférieur reliant les bords intérieur et extérieur, ledit bord inférieur étant incliné et/ou courbe.

Selon un mode avantageux de l'invention, la structure comprend, en outre, au moins une traverse d'assise et/ou une planche à talon, la ou au moins deux des cloisons transversales étant situées longitudinalement à hauteur de la traverse d'assise ou de la planche à talon.

Selon un mode avantageux de l'invention, le bord extérieur de la ou de chacune des cloisons transversales présente une hauteur maximale supérieure à une hauteur maximale de la traverse d'assise ou de la planche à talon adjacente à ladite cloison.

Selon un mode avantageux de l'invention, les cloisons transversales forme une ou plusieurs paires desdites cloisons, disposées parallèles l'une à l'autre et reliées au niveau de leurs bords extérieurs.

Les mesures de l'invention sont intéressantes en ce qu'elles permettent de renforcer aisément la sécurité des passagers des véhicules automobiles présentant des assises avant basses. La géométrie des cloisons transversales selon l'invention permet en effet, lors d'un choc latéral, de maîtriser la flexion du plancher autour d'un axe horizontal. Cette invention est en outre d'autant plus intéressante qu'elle est également simple, économique et facile à mettre en oeuvre.

D'autres caractéristiques et avantages de la présente invention seront mieux compris à l'aide de la description et des dessins parmi lesquels :
- La figure 1 illustre une coupe transversale d'une portion d'une structure de bas de caisse d'un véhicule automobile avec une cloison transversale selon l'invention;
- La figure 2 montre une vue de face de trois cloisons transversales selon l'invention;
- La figure 3 est une vue en perspective et de dessus d'une portion d'une structure de bas de caisse de véhicule automobile avec une paire de cloisons transversales selon l'invention.

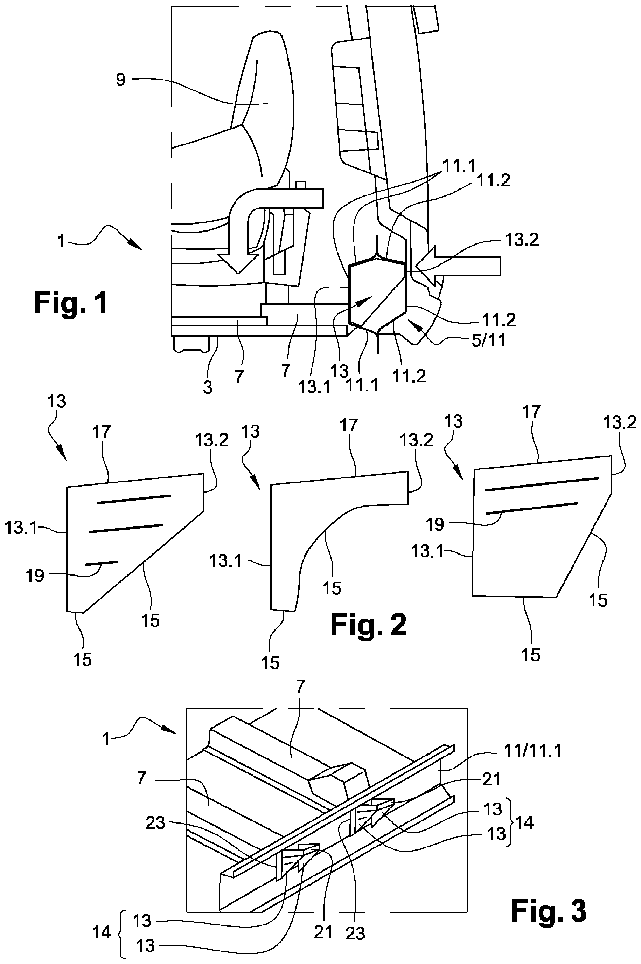

La figure 1 est une coupe transversale d'une portion d'une structure de bas de caisse 1 de véhicule automobile, plus particulièrement la partie gauche. Cette structure de bas de caisse 1 comprend entre autres, un plancher 3 dont les côtés latéraux sont délimités chacun par un profilé de bas de caisse 5, et qui est surplombé au moins par une traverse d'assise avant 7 sur laquelle est fixée un siège avant 9. Les deux profilés de bas de caisse 5 forment en fait chacun un longeron latéral 11, lesquels longerons 11 sont généralement constitués d'une partie intérieure et d'une partie extérieure, communément dénommées respectivement longeron intérieur 11.1 et longeron extérieur 11.2, et qui sont reliées entre elles à leurs extrémités. A l'intérieur d'au moins un des deux longerons latéraux 11 se trouve au moins une cloison transversale 13 selon l'invention. En l'occurrence sur la figure 1, c'est le longeron 11 du côté gauche de la structure de bas de caisse 1 du véhicule qui contient au moins une cloison transversale 13. Cette cloison 13 de longeron latéral est préférentiellement disposée verticalement dans le longeron latéral 11 mais elle peut également présenter une inclinaison moyenne inférieure à 30° par rapport à la verticale. Elle présente en particulier un bord intérieur 13.1 et un bord extérieur 13.2 qui sont respectivement en vis-à-vis le long du longeron intérieur 11.1 et du longeron extérieur 11.2. Cette cloison 13 de longeron latéral se distingue en outre essentiellement par un bord extérieur 13.2 qui présente une hauteur minimale, ou extrémité inférieure, supérieure à une hauteur minimale, ou extrémité inférieure, du bord intérieur 13.1, ceci ayant pour effet de générer au niveau du plancher 3, en cas de choc latéral, un couple de flexion autour d'une direction longitudinale permettant d'amorcer une déformation en flexion de la traverse d'assise et ainsi d'amortir le choc latéral et la déformation du plancher (voir flèches sur la figure 1).

De façon préférentielle une ou plusieurs cloisons transversales 13 selon l'invention sont en fait disposées à hauteur d'au moins une traverse d'assise avant basse 7 ou d'au moins une planche à talon. Dans ce positionnement, le bord extérieur 13.2 de la ou de chacune des cloisons transversales 13 présente une hauteur maximale supérieure à une hauteur maximale de la traverse d'assise avant 7 ou de la planche à talon adjacente. Avantageusement le bord intérieur 13.1 de la ou de chacune des cloisons transversales 13 a généralement une hauteur maximale qui est au moins deux fois supérieure à la hauteur de la traverse 7 adjacente. Cet agencement des cloisons transversales 13 ainsi que leur forme asymétrique et surélevée par rapport à ou aux traverses d'assisse basse 7, fait qu'en cas de choc latéral, le chargement des efforts du longeron 11 ne se fait pas dans l'axe horizontale de la traverse d'assise avant 7 mais de façon désaxée et favorisant dans ce cas la flexion de la traverse d'assise avant 7 vers le bas de la structure de bas de caisse 1 (fléchissement non illustré sur la figure 1).

La figure 2 montre une vue de face de trois cloisons transversales 13 selon l'invention. Comme il a été ci-dessus mentionné (figure 1), le bord extérieur 13.2 de ces cloisons transversales 13 a une hauteur minimale supérieure à une hauteur minimale du bord intérieur 13.1 et cette hauteur minimale du bord extérieur 13.2 est également avantageusement supérieure à une mi-hauteur du bord intérieur 13.1. De la même manière, le bord extérieur 13.2 présente une hauteur maximale supérieure à une hauteur maximale du bord intérieur 13.1.

Parallèlement, et comme illustré sur la figure 2, le bord extérieur 13.2 et le bord intérieur 13.1 des cloisons transversales 13 sont reliés entre eux préférentiellement par un bord inférieur 15 qui peut être incliné et/ou courbe.

Ces cloisons transversales 13 présentent donc une forme asymétrique partiellement triangulaire avec un apport de matière plus importante sur le bord intérieur 13.1 permettant à ces cloisons transversales 13 de présenter, du côté extérieur, une hauteur de reprise d'effort latéral en cas de choc latéral qui est supérieure à celle, du côté intérieur, de transmission de l'effort en question à la traverse d'assise et/ou planche à talon.

Avantageusement, une ou chacune des cloisons transversales 13 présente une ou plusieurs nervures horizontales 19. La présence de ces nervures 19 a pour effet d'apporter également une raideur accrue entre les bords intérieur 13.1 et extérieur 13.2. La figure 3 montre une vue en perspective et de dessus d'une portion d'une structure de bas de caisse 1 de véhicule automobile avec des cloisons transversales 13 disposées parallèlement l'une à l'autre et reliées au niveau de leur bord extérieur 13.2 (voir figure 2) par un profilé 21. Ces cloisons transversales 13 forment deux paires 14 de cloisons 13 qui sont chacune disposées en l'occurrence à hauteur et en regard d'une traverse d'assise avant basse 7. Elles sont généralement constituées par des pièces embouties en acier ou en aluminium de 1 à 2 mm d'épaisseur, et sont généralement fixées par des pattes de fixation 23 soudées à l'intérieur des longerons latéraux 11, en l'occurrence sur la figure 3. Ces pattes de fixation 23, sont fixées sur le longeron intérieur 11.1.

De manière générale, cette invention permet de renforcer les structures de bas de caisse en maîtrisant leur déformation. La géométrie et la disposition des cloisons transversale fixées longitudinalement dans les longerons latéraux et en particulier à hauteur des traverses d'assise offre l'avantage en cas de choc latéral de mieux maîtriser la chronologie du chargement des efforts le long des longerons et sur les traverses d'assise.

## Revendications

1. Structure de bas de caisse (1) de véhicule automobile, comprenant:
- un plancher (3) ;
- un profilé de bas de caisse (5), de chaque côté du plancher (3);
- au moins une cloison transversale (13) dans au moins un des deux profilés de bas de caisse (1);
la ou au moins une des cloisons transversales (13) présentant un bord intérieur (13.1) et un bord extérieur (13.2), le bord extérieur (13.2) présentant une hauteur minimale supérieure à une hauteur minimale du bord intérieur (13.1), de manière à générer au niveau du plancher (3), en cas de choc latéral, un couple de flexion autour d'une direction longitudinale, **caractérisée en ce que** la ou chacune des cloisons transversales (13) présente une ou plusieurs nervures horizontales (19)

2. Structure de bas de caisse (1) selon la revendication 1, **caractérisée en ce que** les bords intérieur (13.1) et extérieur (13.2) de la ou des cloisons transversales (13) sont verticaux et/ou présentent une inclinaison moyenne inférieure à 30° par rapport à la verticale.

3. Structure de bas de caisse (1) selon l'une des revendications 1 et 2, **caractérisée en ce que** chacun des deux profilés de bas de caisse (5) comprend un longeron intérieur (11.1) et un longeron extérieur (11.2) fixé audit longeron intérieur (11.1), le bord intérieur (13.1) de la ou de chacune des cloisons transversales (13) étant en vis-à-vis du longeron intérieur (11.1) correspondant et le bord extérieur (13.2) de la ou de chacune des cloisons transversales (13) étant en vis-à-vis du longeron extérieur (11.2) correspondant.

4. Structure de bas de caisse (1) selon l'une des revendications 1 à 3, **caractérisée en ce que** la hauteur minimale du bord extérieur (13.2) de la ou de chacune des cloisons transversales (13) est supérieure à une mi-hauteur du bord intérieur (13.1).

5. Structure de bas de caisse (1) selon l'une des revendications 1 à 4, **caractérisée en ce que** le bord extérieur (13.2) de la ou de chacune des cloisons transversales (13) présente une hauteur maximale supérieure à une hauteur maximale du bord intérieur (13.1).

6. Structure de bas de caisse (1) selon l'une des revendications 1 à 5, **caractérisée en ce que** la ou chacune des cloisons transversales (13) présente un bord inférieur (15) reliant les bords intérieur (13.1) et extérieur (13.2), ledit bord inférieur (15) étant incliné et/ou courbe.

7. Structure de bas de caisse (1) selon l'une des revendications 1 à 6, **caractérisée en ce que** ladite structure (1) comprend, en outre, au moins une traverse d'assise (7) et/ou une planche à talon, la ou au moins deux des cloisons transversales (13) étant situées longitudinalement à hauteur de la traverse d'assise (7) ou de la planche à talon.

8. Structure de bas de caisse (1) selon la revendication 7, **caractérisée en ce que** le bord extérieur (13.2) de la ou de chacune des cloisons transversales (13) présente une hauteur maximale supérieure à une hauteur maximale de la traverse d'assise (7) ou de la planche à talon adjacente à ladite cloison.

9. Structure de bas de caisse (1) selon l'une des revendications 1 à 8, **caractérisée en ce que** les cloisons transversales (13) forme une ou plusieurs paires (14) desdites cloisons (13), disposées parallèles l'une à l'autre et reliées au niveau de leurs bords extérieurs (13.2).

## Patentansprüche

1. Unterbodenstruktur (1) eines Kraftfahrzeugs, bestehend aus:
- einem Fußboden (3);
- ein Unterbodenprofil (5) auf jeder Seite des Bodens (3);
- mindestens eine Querwand (13) in mindestens einem der beiden Unterbodenprofile (1);
die oder wenigstens eine der Querwände (13) weist einen Innenrand (13.1) und einen Außenrand (13.2) auf, wobei der Außenrand (13.2) eine Mindesthöhe über einer Mindesthöhe des Innenrandes (13.1) aufweist, sodass im Falle eines Seitenaufpralls ein Biegemoment um eine Längsrichtung erzeugt wird, **dadurch gekennzeichnet, dass** die oder jede der Querwände (13) eine oder mehrere horizontale Rippen (19) aufweist

2. Unterbodenstruktur (1) nach Anspruch 1, **dadurch gekennzeichnet, dass** die inneren (13.1) und äußeren (13.2) Ränder der Querwand bzw. der Querwände (13) vertikal sind und/oder eine mittlere Neigung von weniger als 30° zur Vertikalen aufweisen.

3. Unterbodenstruktur (1) nach einem der Ansprüche 1 und 2, **dadurch gekennzeichnet, dass** jedes der beiden Unterbodenprofile (5) einen inneren Längsträger (11.1) und einen äußeren Längsträger (11.2) aufweist, der an dem inneren Längsträger (11.1) befestigt ist, wobei der innere Rand (13.1) der oder jeder der Querwände (13) dem entsprechenden inneren Längsträger (11.1) gegenüberliegt und der äußere Rand (13.2) der oder jeder der Querwände (13) gegenüberliegt Schraube des entsprechenden Außenholms (11.2).

4. Unterwagenaufbau (1) nach einem der Ansprüche 1 bis 3, **dadurch gekennzeichnet, dass** die minimale Höhe des Außenrandes (13.2) der oder jeder der Querwände (13) größer als eine halbe Höhe des Innenrandes (13.1) ist.

5. Unterwagenaufbau (1) nach einem der Ansprüche 1 bis 4, **dadurch gekennzeichnet, dass** der Außenrand (13.2) der oder jeder der Querwände (13) eine maximale Höhe aufweist, die größer ist als eine maximale Höhe des Innenrandes (13.1).

6. Unterbodenstruktur (1) nach einem der Ansprüche 1 bis 5, **dadurch gekennzeichnet, dass** die oder jede der Querwände (13) einen unteren Rand (15) aufweist, der den inneren Rand (13.1) und den äußeren Rand (13.2) verbindet, wobei der untere Rand (15) geneigt und/oder gekrümmt ist.

7. Unterbodenstruktur (1) nach einem der Ansprüche 1 bis 6, **dadurch gekennzeichnet, dass** die Struktur (1) ferner mindestens einen Sitzquerträger (7) und/oder ein Fersenbrett umfasst, wobei die oder mindestens zwei der Querwände (13) in Längsrichtung in Höhe des Sitzquerträgers (7) oder des Fersenbretts angeordnet sind.

8. Unterbodenstruktur (1) nach Anspruch 7, **dadurch gekennzeichnet, dass** der Außenrand (13.2) der oder jeder der Querwände (13) eine maximale Höhe aufweist, die größer ist als eine maximale Höhe des Sitzquerträgers (7) oder des Fersenbretts, das an die Trennwand angrenzt.

9. Unterbodenstruktur (1) nach einem der Ansprüche 1 bis 8, **dadurch gekennzeichnet, dass** die Querwände (13) ein oder mehrere Paare (14) der Trennwände (13) bilden, die parallel zueinander angeordnet und an ihren Außenkanten (13.2) miteinander verbunden sind.

## Claims

1. Motor vehicle body base structure (1), comprising:
- a floor (3);
- bottom body section (5), on each side of the floor (3);
- at least one transverse bulkhead (13) in at least one of the two lower body sections (1);
the or at least one of the transverse partitions (13) having an inner edge (13.1) and an outer edge (13.2), the outer edge (13.2) having a minimum height greater than a minimum height of the inner edge (13.1), so as to generate, at the level of the floor (3), in the event of a lateral impact, a bending torque about a longitudinal direction, **characterized in that** the or each of the transverse partitions (13) has one or more horizontal ribs (19)

2. The body base structure (1) according to claim 1, wherein the inner (13.1) and outer (13.2) edges of the transverse partition(s) (13) are vertical and/or have an average inclination of less than 30° with respect to the vertical.

3. Bottom body structure (1) according to one of claims 1 and 2, **characterized in that** each of the two bottom body sections (5) comprises an inner spar (11.1) and an outer spar (11.2) fixed to the said inner spar (11.1), the inner edge (13.1) of the or each of the transverse partitions (13) being opposite the corresponding inner spar (11.1) and the outer edge (13.2) of the or each of the transverse partitions (13) being opposite the spar corresponding outer rail (11.2).

4. Bottom body structure (1) according to one of claims 1 to 3, **characterized in that** the minimum height of the outer edge (13.2) of the or of each of the transverse partitions (13) is greater than half the height of the inner edge (13.1).

5. Bottom body structure (1) according to one of claims 1 to 4, **characterized in that** the outer edge (13.2) of the or each of the transverse partitions (13) has a maximum height greater than a maximum height of the inner edge (13.1).

6. Bottom body structure (1) according to one of claims 1 to 5, **characterized in that** the or each of the transverse partitions (13) has a lower edge (15) connecting the inner (13.1) and outer (13.2) edges, the said lower edge (15) being inclined and/or curved.

7. A body-base structure (1) according to any one of claims 1 to 6, **characterized in that** said structure (1) further comprises at least one seat-base crosspiece (7) and/or one heel board, the or at least two of the transverse partitions (13) being situated longitudinally at a height of the seat-base crosspiece (7) or of the heel board.

8. Bottom body structure (1) according to claim 7, **characterized in that** the outer edge (13.2) of the or each of the transverse partitions (13) has a maximum height greater than a maximum height of the seat cross-member (7) or of the heel board adjacent to said partition.

9. Bottom body structure (1) according to one of claims 1 to 8, **characterized in that** the transverse partitions (13) form one or more pairs (14) of said partitions (13), arranged parallel to one another and connected at the level of their outer edges (13.2).
